(19) Europäisches Patentamt
European Patent Office
Office européen des brevets

(11) Publication number: 0 122 312
A1

(12) EUROPEAN PATENT APPLICATION

(21) Application number: 83103705.6

(22) Date of filing: 16.04.83

(51) Int. Cl.[3]: C 07 F 7/28
C 08 L 5/14
//C08L1/28

(43) Date of publication of application:
24.10.84 Bulletin 84/43

(84) Designated Contracting States:
AT BE DE FR GB IT NL SE

(71) Applicant: KAY-FRIES, Inc.

Stony Point New York 10980(US)

(72) Inventor: Rummo, Gregory J.
51 Cross Street, Apt. 2D
Bronxville New York 10708(US)

(74) Representative: Müller-Gerbes, Margot, Dipl.-Ing. et al,
c/o Firma DYNAMIT NOBEL AKTIENGESELLSCHAFT
-Patentabteilung- Postfach 1209
D-5210 Troisdorf/Bez.Köln(DE)

(54) **Polytitanium chelates.**

(57) Polytitanium chelates obtained from dialkoxytitanium bis (ß-diketonates) and the use of same as thickening agents for aqueous solutions of polysaccharides.

EP 0 122 312 A1

Croydon Printing Company Ltd

# POLYTITANIUM CHELATES

This invention relates to polytitanium chelates, methods of preparing them and the use of such chelates as thickeners for fluids used in resource recovery operations, such as by incorporating the polytitanium chelates described herein in drilling muds, consolidation fluids or fracturing fluids.

Pure polytitanium chelates may be obtained from dialkoxytitanium bis($\beta$-diketonates) in small amounts of water. The resultant products, when utilized as described herein as thickening agents for fluids used in resource recovery operations, display a delayed effect in increasing the viscosity of the fluids, thereby permitting the handling and transport of the process fluids at viscosities significantly lower than those ultimately imparted to the fluids by the polytitanium chelate thickening agents. Energy demands and wear and tear on the fluid transport equipment are thereby reduced without sacrificing ultimately desired viscosities at the point of fluid use.

Sugiyama et al., in Japanese Kokai 74 07,227, dated January 22, 1974 and reported at 81 Chemical Abstracts 26523v (1974), describe the preparation of poly[titaniumoxy bis($\beta$-diketonate)] having the formula

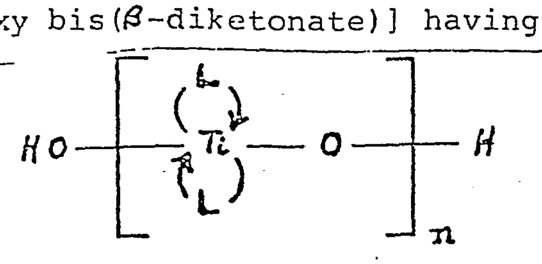

where L is a $\beta$-diketone residue and n is greater than or equal to 2. The products are described as being useful as crosslinking agents for resins. In one example, 90 parts

acetylacetone were added to 100 parts water, followed by 10 wt.% aq. $Na_2CO_3$ addition to pH 5.1. The mixture, after 3 hours at room temperature, yielded a precipitate of 85.2 parts product. The same authors, in Japanese Kokai 74 07,226 of the same date and reported at 81 Chemical Abstracts 26524w (1974), describe products having the same formula as shown above but prepared by bringing 120 parts diisopropoxytitanium bis(acetylacteonate) in 500 parts water to pH 6.1 with N $Na_2CO_3$, and then stirring the mixture for 30 minutes at 40°C to yield 78 parts product.

We have found that dialkoxytitanium bis(β-diketonates) may be converted to pure polytitanium chelates in good yields without acid, with very little water and without use of processes requiring elevated temperatures. Moreover, the products of the processes of this invention are particularly useful as delayed action thickening agents for aqueous polysaccharide solutions used as process fluids in resource recovery operations.

IN THE FIGURE:

Figure 1 shows the time versus viscosity plots for various embodiments of the invention as compared to a prior art thickening agent and illustrates the delayed action effect of thickening agents according to the invention as compared to the rapid thickening effect of an exemplary prior art thickening agent.

Processes leading to products of this invention can be carried out between 0°C to 100°C, more preferably between 10°C to 80°C, and most preferably between 20°C and 40°C. The reactant can be any of the dialkoxytitanium bis(β-diketonates), that is, $(R_1O)(R_2O)Ti(R_3C_3HO_2R_4)_2$:

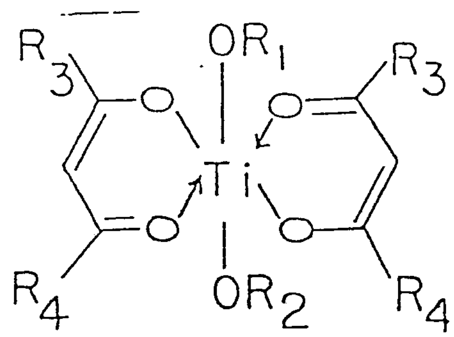

(I)

where $R_1$ and $R_2$ are individually alkyl having from 1 to 8 carbon atoms, including methyl, ethyl, propyl, isopropyl, n-butyl, tert-butyl, sec. butyl and the like up to octyl, and $R_3$ and $R_4$ are also, individually, from methyl to octyl. The most preferable reactant has $R_1 = R_2 =$ isopropyl and $R_3 = R_4 =$ methyl.

The amount of water added to the dialkoxytitanium bis(β-diketonate) should be in the range of from about 0.07 to about 0.3 parts by weight, with about 0.1 parts by weight water preferred.

The following examples illustrate the preparation of polytitanium chelates according to the invention:

Example 1:

1415.3 gm. diisopropoxytitanium bis(acetylacetonate) (75% in isopropanol) was added to 106.44 gm. water at room temperature (25°C). The mixture developed a yellow precipitate within 30 minutes and was allowed to stir overnight. The following morning the mixture was filtered, yielding 730 gm. of polytitanium chelate (95% yield).

Example 2:

120 gm. diisopropoxytitanium bis(acetylacetonate) (75% in isopropanol) was added to 8.4 gm. water at room temperature (25°C). The mixture developed needle-like crystals in 30 minutes, resulting in a yield of 96% of polytitanium chelate.

Example 3:

120 gm. diisopropoxytitanium bis(acetylacetonate) (75% in isopropanol) was added to 36 gm. $H_2O$. A precipitate developed in 30 minutes amounting to a 92% yield of polytitanium chelate.

Example 4:

120 gm. diisopropoxytitanium bis(acetylacetonate) was added to 10 gm. water and the mixture heated to 40°C. A precipitate of polytitanium chelate was obtained in 30 minutes, with a yield of 92%.

Example 5:

120 gm. diisopropoxytitanium bis(acetylacetonate) and 10 gm. water were combined at 10°C and allowed to sit for several hours. A 93% yield of polytitanium chelate was isolated upon filtrations.

Elemental analysis of the polytitanium chelate obtained from the foregoing examples yielded the following experimental data:

| | Theory | Actual |
|---|---|---|
| % H | 5.34 | 5.60 |
| % C | 45.80 | 46.10 |
| M.W. | 262 | 336 |

The molecular weight discrepancy is believed to be a result of the method used to determine molecular weight. Methanol was used as the solvent and it is believed the polytitanium chelate compound reacts with methanol in the following manner:

$$C_{10}H_{14}O_5Ti + 2\ CH_3OH \longrightarrow 2\ CH_3OH \cdot C_{10}H_{14}O_5Ti \qquad (II)$$

This would yield an analyzed product having a molecular weight of 324.

The above product of the invention is totally miscible in hot chloroform and, upon cooling, yields large hexagonal plates. The product is a pure compound and possibly in the form of cyclic repeating units of $C_{10}H_{14}O_5Ti$, i.e.,

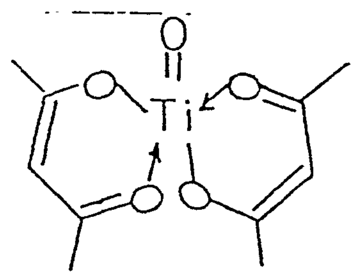

(III)

or cyclic dimer, i.e.,

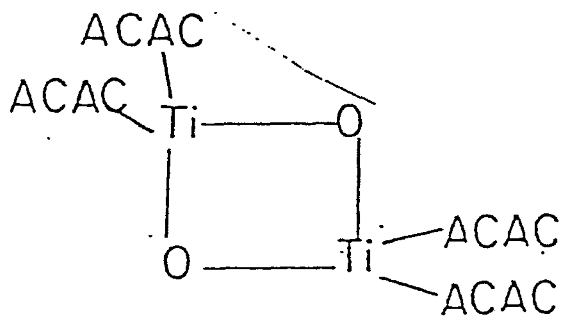

(IV)

or cyclic trimer, i.e.,

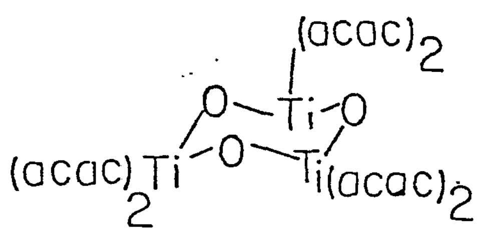

(V)

The polytitanium chelates of this invention are effective thickening agents for polysaccharides in aqueous solutions, most notably polymers of guar gum and cellulose derivatives. Particularly preferred hydratable polysaccharides are galactomannan gums and derivatives thereof, and cellulose derivatives. Examples of such compounds are guar gum, locust bean gum, karaya gum, sodium carboxymethylguar, hydroxyethylguar, sodium carboxymethylhydroxyethylguar, hydroxypropylguar, sodium carboxymethylhydroxymethylcellulose, sodium carboxymethylhydroxyethylcellulose, and hydroxyethylcellulose. The hydroxyethylcellulose derivatives used as gelling agents should be those having from about 0.5 to about 10 moles of ethylene oxide per anhydroglucose unit. The most preferred gelling agent for use in accordance with the present invention is hydroxypropylguar (HPG).

Thickened aqueous solutions as described herein are particularly useful in the oil and gas industry as drilling muds, sands consolidations fluids and fracturing fluids. The polytitanium chelates are especially useful for one-pack systems, in which the dry thickening agent is pre-blended with a polysaccharide such as a galactomannan gum, or two-pack systems. In the one-pack system, the preferred hydratable compound is hydroxypropylguar (HPG) and the preferred thickening agent is the polytitanium chelate obtained by the previously described processes when diisopropoxytitanium bis(acetylacetonate) is used as a reactant. The preferred weight ratios of HPG to

///

the polytitanium chelate are from about 40:1 to about 1:4, with the most preferred ratios being from about 3:1 to about 1:1.

The following examples illustrate the one-pack system:

Example 6:

3 gm. HPG and 2 gm. polytitanium chelate according to the preceding examples is allowed to hydrate in 300 cc. stirred water at room temperature, yielding a crosslinked HPG solution of approximately 1% HPG. Various other solid additives such as carbonate and bicarbonate buffers may be added as well as chelates like citric acid for control of iron and potassium chloride for clay control.

Example 7:

3 gm. HPG and 1 gm. solid polytitanium chelate obtained according to the preceding examples were dry blended and simultaneously added to 300 cc. stirred tap water at room temperature. The mixture was allowed to stir for one minute until noticeably thick. Viscosity measurements were then made with a Brookfield Viscometer, Model LV, fitted with a No. 4 spindle, and the following approximate data were obtained:

| | | | | | |
|---|---|---|---|---|---|
| Time(min.): | 3 | 5 | 16 | 27 | 36 |
| Viscosity(Cp): | 17,000 | 28,000 | 87,000 | 160,000 | 180,000 |

It should be noted that the thickened acqueous solutions are non-Newtonian and the viscosity data provided above and in subsequent examples are therefore approximations.

The following example illustrates the use of a polytitanium chelate according to the invention as a thickening agent in a two-pack system:

///

Example 8:

316 gm. of a stirred hydrated HPG solution was thickened with 0.3 gm. of solid polytitanium chelate obtained according to the preceding examples. Thickening, as noted by the gel climbing the stirrer shaft, occurred in 20-30 seconds, with the fluid reaching a viscosity of 120,000 cp. However, the fluid continued to thicken over a 54-minute period and achieved a final viscosity of 170,000 cp.

Example 9:

Example 8 was repeated with the substitution of Kay-Fries TIACA (TM), a prior art thickening agent (bis 2,4-pentanedione bisisopropyltitanate), for the polytitanium chelate, and maximum viscosity was attained in only 14 minutes.

Example 10:

The procedure of Example 6 was repeated and, when the vortex of the stirred mixture started closing, viscosity measurements were begun which yielded the following approximate data:

| | | | | | | |
|---|---|---|---|---|---|---|
| Time (min.): | 5 | 10 | 20 | 26 | 33 | 45 |
| Viscosity (Cp): | 25,000 | 45,000 | 84,000 | 97,000 | 167,000 | 198,000 |

Example 11:

The procedure of Example 8 was repeated and viscosity measurements yielded the following approximate data:

| | | | | | |
|---|---|---|---|---|---|
| Time (min.): | 6 | 12 | 21 | 26 | 41 |
| Viscosity (Cp): | 120,000 | 133,000 | 146,000 | 156,000 | 183,000 |

The immediately preceding examples indicate that in addition to being useful as solid one-pack or two-pack thickening agents, polytitanium chelates according to the invention have further utility in that total reactivity is

somewhat delayed; although sufficient viscosity is initially built up to transport propping agents, the viscosity of the thickened fluid continues to build over a period of about one hour. This attribute is cost-effective, in that less horsepower is needed to pump a less viscous fluid and the mechanical stresses imposed on the fluid transport process equipment are reduced.

Figure 1 illustrates viscosity variation with time for various formulations according to the invention and for a prior art formulation. Line A is representative of the effect of a one-pack 3:2 HPG/polytitanium chelate formulation as in Example 10, line B illustrates the results with a one-pack 3:1 formulation according to Example 7, curve C represents the use of a two-pack system as described in Example 11, and curve D shows the effects of the prior art system described in Example 9. The delayed effect of thickening agents according to the invention as compared to the rapid effect of the exemplary prior art thickening agent is apparent from the illustration.

It will be understood that the specification and examples are illustrative but not limitative of the present invention and that other embodiments within the spirit and scope of the invention will suggest themselves to those skilled in the art.

///

What is claimed is:

1. A process for making polytitanium chelate, said process comprising the step of admixing at least one dialkoxytitanium bis($\beta$-diketonate), having the formula $(R_1O)(R_2O)Ti(R_3C_3HO_2R_4)_2$, wherein $R_1$, $R_2$, $R_3$, and $R_4$ are individually alkyl having from 1 to 8 carbon atoms, with from about 0.07 to about 0.3 parts by weight water.

2. A process for making polytitanium chelate, said process comprising the steps of (a) forming a mixture consisting essentially of at least one dialkoxytitanium bis($\beta$-diketonate), having the formula $(R_1O)(R_2O)Ti(R_3C_3HO_2R_4)_2$, wherein $R_1$, $R_2$, $R_3$ and $R_4$ are individually alkyl having from 1 to 8 carbon atoms, and from about 0.07 to about 0.3 parts by weight water, and (b) separating the resultant polytitanium chelate precipitate from said water.

3. A process for making polytitanium chelate, said process consisting essentially of (a) forming a mixture consisting essentially of diisopropoxytitanium bis(acetylacetonate) and from about 0.07 to about 0.3 parts by weight water, and (b) separating the resultant polytitanium chelate precipitate from said water.

4. A process as claimed in claims 1, 2 and 3 wherein said process is conducted at a temperature of from about 20°C to about 40°C.

5. The polytitanium chelate products of processes as claimed in claims 1, 2 and 3.

6. The use of the polytitanium chelate products of processes as claimed in claims 1, 2 and 3 as thickening agents for aqueous polysaccharide solutions.

7. A one-pack system for forming thickened aqueous solutions upon addition to a fluid comprising water, said system comprising a dry admixture of at least one polytitanium chelate product of processes as claimed in claims 1, 2 and 3 and at least one polysaccharide.

8. A one-pack system for forming thickened aqueous solution upon addition to a fluid comprising water, said system comprising a dry admixture of (a) the polytitanium chelate product of processes as claimed in claims 1 and 2, wherein said dialkoxytitanium bis(β-diketonate) is diisopropoxytitanium bis(acetylacetonate), and claim 3; and (b) at least one polysaccharide selected from the group consisting of galactomannan gums and derivatives thereof and cellulose derivatives.

9. A one-pack system for forming thickened aqueous solutions upon addition to a fluid comprising water, said system comprising a dry admixture of a polytitanium chelate product of a process as claimed in claim 3 and hydroxypropylguar.

10. A one-pack system as claimed in claim 9, wherein the weight ratio of hydroxypropylguar to polytitanium chelat is from about 3:1 to about 1:1.

European Patent Office

# EUROPEAN SEARCH REPORT

0122312

Application number

EP 83 10 3705

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
| --- | --- | --- | --- |
| A | US-A-3 017 282 (HAROLD C. BRILL) * Column 7, lines 14-22; column 3, lines 1-6, 39-47 * | 1 | C 07 F 7/28<br>C 08 L 5/14<br>C 08 L 1/28 |
| A | US-A-3 923 700 (BRIAN GEORGE JAGGERS) * Column 4, lines 17-24 * | 1 | |
| A | US-A-2 614 112 (THOMAS BOYD) * Column 1, lines 36-40; column 2, lines 5-8 * | 1 | |
| | | | TECHNICAL FIELDS SEARCHED (Int. Cl. 3) |
| | | | C 07 F 7/00<br>C 07 C 45/00<br>C 07 C 49/00<br>C 08 L 1/00 |

The present search report has been drawn up for all claims

| Place of search | Date of completion of the search | Examiner |
| --- | --- | --- |
| THE HAGUE | 12-12-1983 | SUTER M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82